# FASCICULE DE BREVET EUROPEEN

(11) **EP 1 483 991 B1**
(45) Date de publication et mention de la délivrance du brevet: **24.01.2007**
(21) Numéro de dépôt: 04356084.6
(22) Date de dépôt: 01.06.2004
(51) Int. Cl.: A47J 31/24

(54) **Cafetière électrique et procédé de fabrication de café a l'aide d'une telle cafetière**
Elektrische Kaffeemaschine und Methode zum Kaffeemachen mit Hilfe einer solchen Kaffeemaschine
Electric coffee maker and procedure of coffee production with such a coffe maker

(30) Priorité: 02.06.2003 FR 0306628
(43) Date de publication de la demande: 08.12.2004
(73) Titulaire: SANTOS, 69120 Vaulx en Velin (FR)
(72) Inventeur: Fouquet, Nicolas, 69003 Lyon (FR)
(74) Mandataire: Myon, Gérard Jean-Pierre

(56) Documents cités:
- GB-A- 786 401
- US-A- 3 584 472
- US-A- 4 958 747
- US-A- 5 123 335
- US-A- 5 833 096

## Description

La présente invention concerne une cafetière électrique du type comportant un réservoir de stockage d'eau pour la préparation du café. Elle concerne également un procédé de fabrication de café à l'aide d'une telle cafetière.

Par cafetière électrique, on entend aussi bien une cafetière fonctionnant avec des filtres qu'une machine à café permettant de préparer notamment des cafés expresso.

L'une des méthodes connues pour préparer du café à boire consiste à chauffer de l'eau, puis à faire passer cette eau à travers de la mouture de café.

Dans une cafetière électrique classique, l'eau est puisée dans un réservoir, qu'il faut régulièrement réapprovisionner. Remplir d'eau ce réservoir à l'aide d'une cruche ou d'une bouteille achetée pleine dans le commerce est une opération fastidieuse à réaliser, lors de laquelle on risque toujours de renverser de l'eau en dehors du réservoir.

Dans US-A-5,123,335 est décrit une machine à café qui comporte un réservoir d'eau amovible. Ce réservoir est tel que, lorsqu'il a été vidé, son remplissage avec de l'eau est la seule manière possible de réapprovisionner la machine à café en eau.

L'invention a au moins pour but de pouvoir faciliter le réapprovisionnement en eau d'une cafetière électrique du type précité.

A cet effet, l'invention a pour objet une cafetière électrique, comportant un dispositif de préparation de café à boire à partir de mouture de café et d'eau, un réservoir à même de stocker de l'eau pour la préparation du café à boire, ainsi qu'une enveloppe de protection qui renferme au moins partiellement le dispositif, caractérisée en ce qu'à l'intérieur de l'enveloppe de protection, ledit réservoir délimite un volume libre configuré de manière à pouvoir être rempli d'eau destinée à être utilisée pour préparer du café et à pouvoir accueillir temporairement une bouteille de stockage d'eau pour la préparation du café à boire est prévu à l'intérieur de l'enveloppe de protection, une ouverture ménagée dans l'enveloppe de protection donnant accès audit volume libre, la cafetière électrique comprenant un dispositif de raccordement temporaire du dispositif de préparation de café à boire au volume intérieur de la bouteille de stockage d'eau.

D'autres caractéristiques avantageuses de cette cafetière électrique sont définies par les revendications 2 à 10 annexées.

L'invention a également pour objet un procédé de préparation de café à boire, caractérisé en ce qu'on utilise une cafetière telle que définie ci-dessus et en ce qu'il comporte des étapes dans lesquelles :
- a) le dispositif de raccordement temporaire achemine de l'eau depuis une bouteille de stockage disposée dans ledit volume libre, jusqu'au dispositif de préparation de café à boire, puis
- b) le dispositif de préparation de café à boire prépare du café à boire avec l'eau acheminée à l'étape a).

L'invention sera bien comprise à la lecture de la description qui va suivre, donnée uniquement à titre d'exemple et faite en se référant aux dessins annexés, sur lesquels :
- la figure 1 est une vue éclatée, en perspective, d'un ensemble comprenant une bouteille de stockage d'eau et une cafetière électrique conforme à l'invention ;
- la figure 2 est une vue éclatée, en perspective, avec arrachement, et représente le même ensemble que la figure 1 vu sous un autre angle ;
- la figure 3 est une vue en perspective de l'ensemble représenté aux figures 1 et 2 alors que la bouteille est en place dans la cafetière ;
- la figure 4 est une vue analogue à la figure 3 et illustre l'état de la cafetière électrique des figures 1 à 3 après que la bouteille de stockage y a été installée ;
- la figure 5 est une vue analogue aux figures 3 et 4 et illustre une autre manière possible d'utiliser la cafetière électrique des figures 1 à 4 ;
- la figure 6 est une vue en perspective de figures géométriques à l'aide desquelles on définit un volume libre prévu pour la bouteille de stockage d'eau, à l'intérieur de la cafetière électrique des figures 1 à 5.

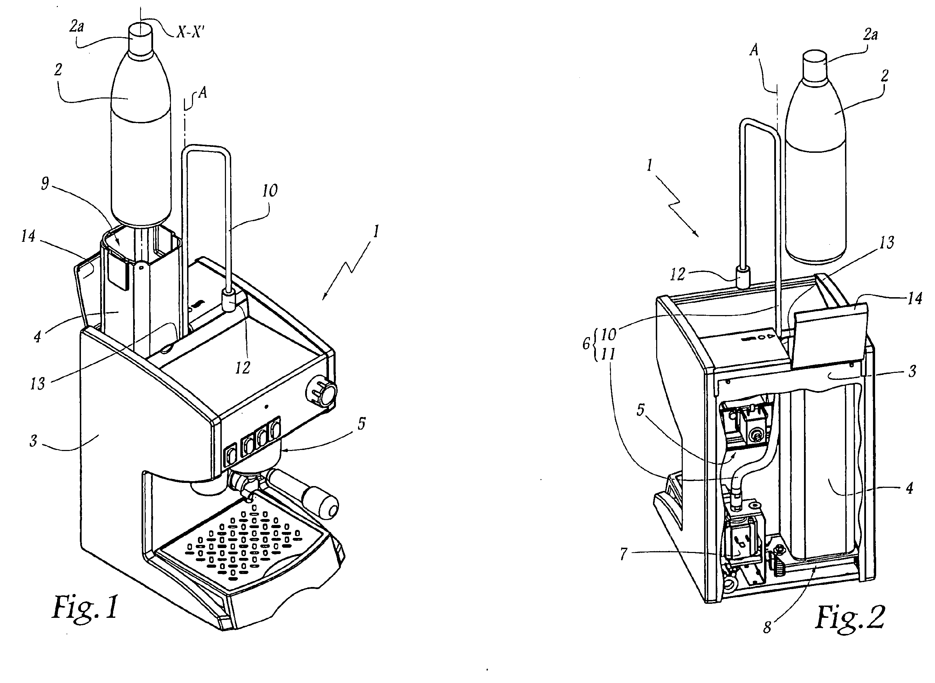

Sur les figures 1 à 5, il est représenté une cafetière électrique 1, qui est configurée de manière à pouvoir renfermer une bouteille 2 de stockage d'eau et à pouvoir préparer du café à boire avec de l'eau provenant de cette bouteille 2. Cette dernière, qui est une bouteille du commerce remplaçable, est visible uniquement aux figures 1 à 3.

La cafetière électrique 1 comporte une enveloppe de protection 3, qui renferme un réservoir 4 et une partie d'un dispositif 5, connu en soi, de préparation de café à boire à partir de mouture de café et d'eau. Un conduit d'aspiration 6, dont une extrémité se raccorde sur une pompe 7, est prévu pour puiser de l'eau et l'acheminer jusqu'au dispositif 5, dont fait partie cette pompe 7.

Le réservoir 4 est amovible et repose sur une balance 8, qui est disposée à l'intérieur de l'enveloppe de protection 3 et sert à déterminer par pesage la quantité d'eau encore disponible pour la préparation de café, afin qu'un voyant lumineux puisse s'allumer lorsque cette quantité d'eau disponible passe en dessous d'un seuil prédéterminé.

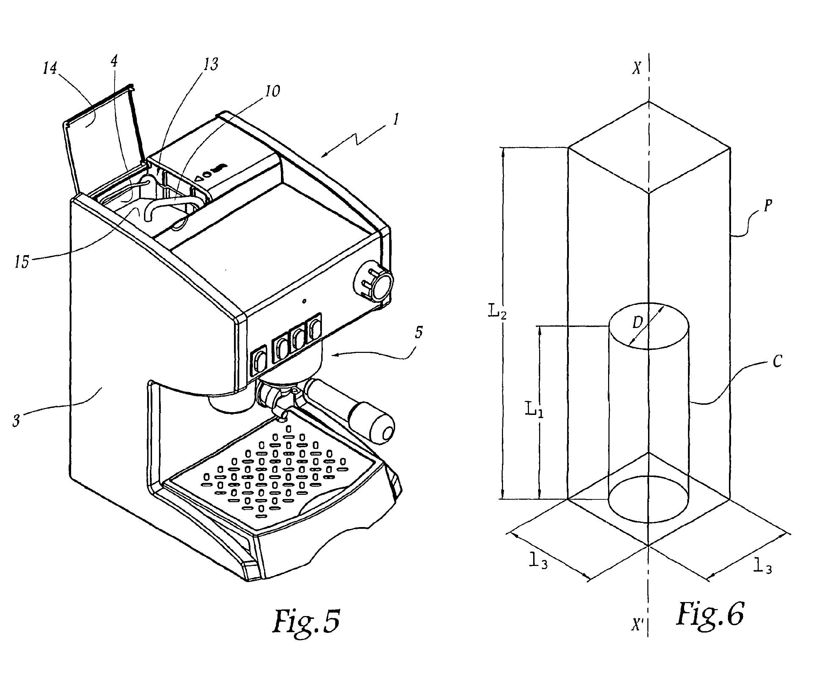

Le réservoir 4 est ouvert sur le dessus et délimite un volume libre 9 configuré de manière à pouvoir accueillir temporairement au moins une bouteille 2 de stockage de 1,5 litres d'eau, du type de celles couramment vendues pleines d'eau minérale dans le commerce. A cette fin, ce volume libre 9 est allongé selon un axe sensiblement vertical X-X'. Il a des dimensions telles que son contour s'étend en dehors du cylindre de révolution fictif C représenté à la figure 6. Ce cylindre de révolution C a une longueur L₁ de 170 mm et un diamètre D de 70 mm.

De préférence, le volume libre 9 est contenu dans le parallélépipède rectangle fictif P représenté à la figure 6. Ce parallélépipède rectangle P est allongé et a une longueur L₂ égale à 350 mm. Sa section transversale est un carré dont chaque côté a une mesure l₃ égale à 120 mm. Si le volume libre 9 présente les mêmes dimensions que le parallélépipède rectangle P, on peut y loger aisément une bouteille de stockage de deux litres d'eau, du type de celles couramment vendues pleines d'eau minérale.

Le conduit d'aspiration 6 comporte un tuyau 10, rigide et coudé de manière à effectuer un demi-tour, ainsi qu'un tuyau déformable 11 qui raccorde le tuyau rigide 10 à la pompe 7. Le tuyau rigide 10, dont l'extrémité libre est pourvue d'une crépine 12, est monté de manière à pouvoir coulisser selon un axe sensiblement vertical A et à pouvoir pivoter autour de cet axe A, si bien que la crépine 12 peut être introduite dans le réservoir 4 ou bien être placée en dehors de ce réservoir 4.

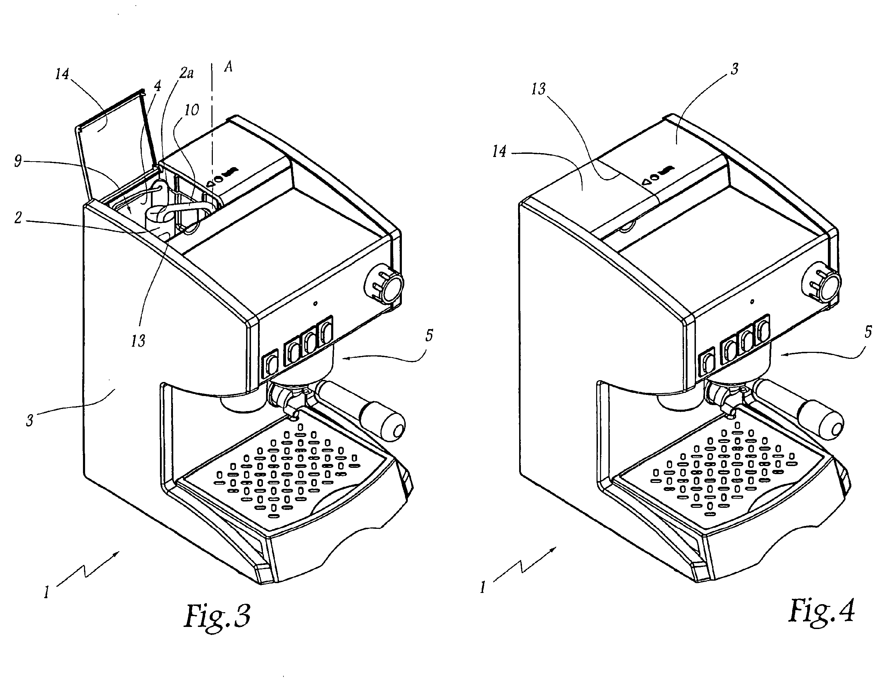

Une ouverture 13 pour le passage du réservoir 4 et de la bouteille d'eau 2 est prévue dans l'enveloppe de protection 3. Elle est située dans le prolongement et au-dessus du volume libre 9. Une trappe 14 montée à pivotement peut obturer cette ouverture 13, ce qu'illustre la figure 4.

L'eau avec laquelle le dispositif 5 prépare du café peut être stockée de deux manières dans la cafetière 1. L'une de ces deux matières est illustrée à la figure 3, tandis que l'autre manière de stocker l'eau est illustrée à la figure 5.

Sur la figure 3, une bouteille 2, dont le bouchon a été ôté et qui contient de l'eau minérale achetée dans cette bouteille 2, se trouve dans le réservoir 4, où elle occupe l'essentiel du volume 9. Son goulot 2a, qui est dirigé vers le haut, n'est pas obturé hermétiquement, si bien que de l'air atmosphérique peut être admis dans la bouteille par ce goulot 2a, au fur et à mesure que l'eau est consommée. Le conduit d'aspiration 6 pénètre, par le goulot 2a, dans la bouteille 2, où son extrémité munie de la crépine 12 peut prélever de l'eau pour l'acheminer ensuite jusqu'à la pompe 7.

Lorsque la bouteille 2 est vide, le réapprovisionnement de la cafetière électrique 1 consiste à remplacer cette bouteille 2 vide par une autre bouteille semblable mais pleine. Pour retirer la bouteille 2 vide, on commence par ouvrir la trappe 14. Ensuite, on extrait la crépine 12 de la bouteille 2 vide, en faisant coulisser le tuyau rigide 10 vers le haut, après quoi on fait pivoter ce tuyau rigide 10 de manière à dégager l'ouverture 13. Suite à cela, le conduit d'aspiration 6 est tel qu'illustré aux figures 1 et 2. On peut alors faire coulisser la bouteille 2 en dehors du réservoir 4. Ensuite, on installe une bouteille 2 pleine en appliquant la procédure inverse de celle qui vient d'être décrite.

Il ressort de ce qui précède que, conformément au but de l'invention, le réapprovisionnement en eau effectué en échangeant une bouteille vide par une pleine est particulièrement simple à réaliser, notamment lorsque la bouteille de remplacement n'a pas été remplie par l'utilisateur, mais achetée déjà pleine.

On notera que, si le dispositif 5 est alimenté avec de l'eau stockée dans des bouteilles 2, aucun réservoir de stockage de l'eau, tel que le réservoir 4, n'est à nettoyer régulièrement, ce qui est avantageux.

Par ailleurs, l'enveloppe de protection 3 et la trappe 4 protègent la bouteille 2 en cours d'utilisation contre des substances, telles que des poussières ou du marc de café, qui pourraient pénétrer dans cette bouteille 2 et polluer l'eau qu'elle contient.

En outre, le fait que la bouteille 2 en cours d'utilisation occupe une place déterminée à l'intérieur de l'enveloppe de protection 3 favorise un bon raccordement de cette bouteille 2 au dispositif 5, sans risque de désamorçage de la pompe 7.

Par ailleurs, si la bouteille 2 comporte une fuite, l'eau qui s'échappe par cette fuite est récupérée par le réservoir 4 et ne risque donc pas de générer des dommages.

Avantageusement, la bouteille 2 est achetée déjà pleine dans le commerce. Elle contient une eau minérale faiblement minéralisé, qui ne comporte pas ou que peu de chlore ou d'autres substances altérant le goût du café et qui n'est pas ou que faiblement chargée en calcaire. Un café préparé avec une telle eau présente des qualités gustatives améliorées. En effet, comme la présence de chlore, la présence de calcaire dans l'eau dégrade le goût du café, puisqu'elle conduit à la formation de tartre qui nuit, à la longue, aux performances de la cafetière.

Sur la figure 5, aucune bouteille 2 n'est installée à l'intérieur du réservoir 4, qui est en revanche rempli d'eau 15 destinée à être aspirée par le conduit 6 avant d'être utilisée pour préparer du café. La présence du réservoir 4 fait donc qu'il est possible d'utiliser la cafetière 1 d'une manière classique.

## Revendications

1. Cafetière électrique, comportant un dispositif (5) de préparation de café à boire à partir de mouture de café et d'eau, un réservoir (4) à même de stocker de l'eau (15) pour la préparation du café à boire, ainsi qu'une enveloppe de protection (3) qui renferme au moins partiellement le dispositif de préparation de café à boire (5), **caractérisée en ce qu'**à l'intérieur de l'enveloppe de protection (3), ledit réservoir (4) délimite un volume libre (9) configuré de manière à pouvoir être rempli d'eau (15) destinée à être utilisée pour préparer du café et à pouvoir accueillir temporairement une bouteille (2) de stockage d'eau pour la préparation du café à boire, une ouverture (13) ménagée dans l'enveloppe de protection (3) donnant accès audit volume libre (9), la cafetière électrique comprenant un dispositif (6) de raccordement temporaire du dispositif (5) de préparation de café à boire au volume intérieur de la bouteille (2) de stockage d'eau.

2. Cafetière selon la revendication 1, **caractérisée en ce que** ledit volume libre (9) est contenu dans un parallélépipède rectangle fictif (P) qui a une longueur (L₂) de 350 mm et une section transversale carrée de 120 mm de côté (l₃).

3. Cafetière selon la revendication 1 ou 2, **caractérisée en ce que** le volume libre (9) contient un cylindre de révolution fictif (C) ayant une longueur (L₁) d'environ 170 mm et un diamètre (D) d'environ 70 mm.

4. Cafetière selon l'une quelconque des revendications précédentes, **caractérisée en ce que** ledit volume libre (9 ; 109) est allongé selon un axe sensiblement vertical (X-X').

5. Cafetière selon l'une quelconque des revendications précédentes, **caractérisée en ce que** l'ouverture (13) donnant accès audit volume libre (9) est située au-dessus de ce volume, l'enveloppe de protection (3) comportant une trappe mobile (14) d'obturation de cette ouverture (13).

6. cafetière selon l'une quelconque des revendications précédentes, **caractérisée en ce qu'**elle comporte une balance (8) de pesage de l'eau disponible pour la préparation de café.

7. Cafetière selon l'une quelconque des revendications précédentes, **caractérisée en ce que** le dispositif de raccordement temporaire comprend un conduit d'aspiration (6) se terminant par deux extrémités, dont une se raccorde sur le dispositif (5) de préparation de café, l'autre extrémité (12) du conduit d'aspiration (6) étant mobile et à même d'être introduite dans une bouteille (2) disposée sensiblement verticalement dans ledit volume libre (9).

8. Cafetière selon l'une quelconque des revendications précédentes, **caractérisée en ce qu'**une pompe (7) fait partie du dispositif de préparation de café (5).

9. Cafetière selon l'une quelconque des revendications précédentes, **caractérisée en ce qu'**elle comporte une bouteille (2) stockant de l'eau et disposée dans ledit volume libre (9), le dispositif de raccordement temporaire (6) raccordant le volume intérieur de cette bouteille (2) au dispositif (5) de préparation de café à boire.

10. Cafetière selon les revendications 7 et 9, **caractérisé en ce que** le goulot (2a) de la bouteille (2) est dirigé vers le haut et n'est pas obturé hermétiquement, ledit conduit d'aspiration (6) pénétrant dans la bouteille (2) par ce goulot (2a).

11. Procédé de préparation de café à boire, **caractérisé en ce qu'**on utilise une cafetière (1) selon l'une quelconque des revendications précédentes, et **en ce qu'**il comporte des étapes dans lesquelles :
- a) le dispositif de raccordement temporaire (6) achemine de l'eau depuis une bouteille de stockage (2) disposée dans ledit volume libre (9), jusqu'au dispositif (5) de préparation de café à boire, puis
- b) le dispositif (5) de préparation de café à boire prépare du café à boire avec l'eau acheminée à l'étape a).

## Claims

1. Electric coffee maker, including a device (5) for preparing coffee for drinking from ground coffee and water, a reservoir (4) suitable for storing the water (15) for preparing the coffee for drinking, and also a protective jacket (3) that at least partially encloses the device (5) for preparing coffee for drinking, **characterized in that**, inside the protective jacket (3), said reservoir (4) delimits a free volume (9) configured so that it is possible for it to be filled with water (15) designed to be used for preparing the coffee and so that it is possible temporarily to receive a bottle (2) for storing water for preparing the coffee for drinking, an opening (13) provided in the protective jacket (3) giving access to said free volume (9), the electric coffee maker comprising a device (6) for temporary connection of the device (5) for preparing coffee for drinking to the inner volume of the bottle (2) for storing water.

2. Coffee maker according to Claim 1, **characterized in that** said free volume (9) is contained in an imaginary rectangular parallelepiped (P) with a length (L₂) of 350 mm and a square cross section with a side (l₃) of 120 mm.

3. Coffee maker according to Claim 1 or 2, **characterized in that** the free volume (9) contains an imaginary cylinder of revolution (C) having a length (L₁) of approximately 170 mm and a diameter (D) of approximately 70 mm.

4. Coffee maker according to any one of the preceding claims, **characterized in that** said free volume (9; 109) is elongate according to a substantially vertical axis (X-x').

5. Coffee maker according to any one of the preceding claims, **characterized in that** the opening (13) giving access to said free volume (9) is located above this volume, the protective jacket (3) including a moveable flap (14) for closing off this opening (13).

6. Coffee maker according to any one of the preceding claims, **characterized in that** it includes a balance (8) for weighing the available water for preparing coffee.

7. Coffee maker according to any one of the preceding claims, **characterized in that** the temporary-connection device comprises a suction conduit (6) ending in two ends, one end of which is connected to the device (5) for preparing coffee, the other end (12) of the suction conduit (6) being moveable and capable of being inserted into a bottle (2) arranged substantially vertically in said free volume (9).

8. Coffee maker according to any one of the preceding claims, **characterized in that** a pump (7) forms part of the device (5) for preparing coffee.

9. Coffee maker according to any one of the preceding claims, **characterized in that** it includes a bottle (2) storing the water and arranged in said free volume (9), the temporary-connection device (6) connecting the inner volume of this bottle (2) to the device (5) for preparing coffee for drinking.

10. Coffee maker according to Claims 7 and 9, **characterized in that** the neck (2a) of the bottle (2) faces upwards and is not hermetically sealed, said suction conduit (6) penetrating the bottle (2) via this neck (2a).

11. Method for preparing coffee for drinking, **characterized in that** use is made of a coffee maker (1) according to any one of the preceding claims, and **in that** it includes the steps in which:
- a) the temporary-connection device (6) conveys the water from a storage bottle (2) arranged in said free volume (9) to the device (5) for preparing coffee for drinking; and then
- b) the device (5) for preparing coffee for drinking prepares the coffee for drinking with the water conveyed in step a).

## Patentansprüche

1. Elektrische Kaffeemaschine, die eine Vorrichtung (5) zum Zubereiten von Trinkkaffee ausgehend von gemahlenem Kaffee und Wasser aufweist, einen Behälter (4), der Wasser (15) zum Zubereiten des Trinkkaffees lagern kann, sowie einen Schutzmantel (3), der die Trinkkaffeezubereitungsvorrichtung (5) zumindest teilweise umschließt, **dadurch gekennzeichnet, dass** im Inneren des Schutzmantels (3) der Behälter (4) ein freies Volumen (9) abgrenzt, das so konfiguriert ist, dass es mit Wasser (15) gefüllt werden kann, das dazu bestimmt ist, Kaffee zuzubereiten, und vorübergehend eine Flasche (2) zum Lagern von Wasser für das Zubereiten des Trinkkaffees aufzunehmen, wobei eine Öffnung (13) in dem Schutzmantel (3) eingerichtet ist und Zugang zu dem freien Volumen (9) bietet, wobei die elektrische Kaffeemaschine eine Vorrichtung (6) zum vorübergehenden Anschließen der Vorrichtung (5) zum Zubereiten von Trinkkaffee an das Innenvolumen der Flasche (2) zum Lagern von Wasser aufweist.

2. Kaffeemaschine nach Anspruch 1, **dadurch gekennzeichnet, dass** das freie Volumen (9) in einem fiktiven Rechteckparallelepiped (P) enthalten ist, das eine Länge (L₂) von 350 mm und einen quadratischen Querschnitt von 120 mm Seitenlänge (l₃) hat.

3. Kaffeemaschine nach Anspruch 1 oder 2, **dadurch gekennzeichnet, dass** das freie Volumen (9) einen fiktiven Rotationszylinder (C) aufweist, der eine Länge (L₁) von etwa 170 mm und einen Durchmesser (D) von etwa 70 mm hat.

4. Kaffeemaschine nach einem der vorhergehenden Ansprüche, **dadurch gekennzeichnet, dass** sich das freie Volumen (9; 109) entlang einer im Wesentlichen senkrechten Achse (X-X') erstreckt.

5. Kaffeemaschine nach einem der vorhergehenden Ansprüche, **dadurch gekennzeichnet, dass** die Öffnung (13), die zu dem freien Volumen (9) Zugang gibt, über diesem Volumen liegt, wobei der Schutzmantel (3) eine bewegliche Klappe (14) zum Verschließen dieser Öffnung (13) aufweist.

6. Kaffeemaschine nach einem der vorhergehenden Ansprüche, **dadurch gekennzeichnet, dass** sie eine Waage (8) zum Wiegen des Wassers aufweist, das für das Zubereiten von Kaffee verfügbar ist.

7. Kaffeemaschine nach einem der vorhergehenden Ansprüche, **dadurch gekennzeichnet, dass** die Vorrichtung zum vorübergehenden Anschließen eine Ansaugleitung (6) aufweist, die in zwei Enden endet, von welchen eines an die Vorrichtung (5) zum Zubereiten von Kaffee angeschlossen wird, während das andere Ende (12) der Ansaugleitung (6) frei ist und in eine Flasche (2) eingeführt werden kann, die im Wesentlichen senkrecht in dem freien Volumen (9) angeordnet ist.

8. Kaffeemaschine nach einem der vorhergehenden Ansprüche, **dadurch gekennzeichnet, dass** eine Pumpe (7) zu der Kaffeezubereitungsvorrichtung (5) gehört.

9. Kaffeemaschine nach einem der vorhergehenden Ansprüche, **dadurch gekennzeichnet, dass** sie eine Flasche (2) aufweist, die Wasser lagert und in dem freien Volumen (9) angeordnet ist, wobei die vorübergehende Anschlussvorrichtung (6) das Innenvolumen dieser Flasche (2) mit der Vorrichtung (5) zum Zubereiten von Trinkkaffee verbindet.

10. Kaffeemaschine nach den Ansprüchen 7 und 9, **dadurch gekennzeichnet, dass** der Hals (2a) der Flasche (2) nach oben gerichtet ist und nicht hermetisch verschlossen ist, wobei die Ansaugleitung (6) in die Flasche (2) durch diesen Hals (2a) eindringt.

11. Verfahren zum Zubereiten von Trinkkaffee, **dadurch gekennzeichnet, dass** man eine Kaffeemaschine (1) nach einem der vorhergehenden Ansprüche verwendet, und dadurch, dass es Schritte aufweist, in welchen:
a) die vorübergehende Anschlussvorrichtung (6) Wasser von der Lagerflasche (2), die in dem freien Volumen (9) angeordnet ist, bis zu der Vorrichtung (5) zum Zubereiten von Trinkkaffee leitet, und dann
b) die Vorrichtung (5) zum Zubereiten von Trinkkaffee mit dem im Schritt a) geleiteten Wasser zubereitet.
